# EUROPEAN PATENT APPLICATION

(11) **EP 2 894 593 A1**
(43) Date of publication of application: **15.07.2015**
(21) Application number: 14368010.6
(22) Date of filing: 14.01.2014
(51) Int. Cl.: G06Q 10/02

(54) **Ticket holder-initiated seat changes**

(71) Applicant: Amadeus S.A.S., 06410 Biot (FR)
(72) Inventor: Khan, Roshan, 560047 Bangalore (IN)
(74) Representative: Samson & Partner Patentanwälte mbB

(57) **Abstract**

A method, apparatus, and program product enable ticket holders, e.g., travelers scheduled to travel on a travel vehicle, or attendees at an entertainment venue, to change seat assignments. Seat assignment changes may be initiated in response to a request communicated between a mobile device of a ticket holder and another device over a short range wireless network, and in some instances may result in updating ancillary services such as special meals of one or more ticket holders based upon the updated seat assignments.

## Description

### Field of the Invention

The invention is generally related to computers and computer software, and in particular, to travel-related computer software and systems.

### Background of the Invention

Computer technology is increasingly used by travelers to make traveling less difficult and more efficient. Automated booking systems, for example, enable travelers to view prices and schedules for passenger vehicles such as airplanes, buses, trains, subways, ferries, cruise ships, etc., as well as purchase tickets for such vehicles when a suitable match is found. Flight and public transportation status systems are available to track delays in scheduled flights, buses, subways and passenger trains, often enabling travelers to view in real-time where a passenger vehicle is currently located and when it will arrive at its intended destination. In addition, for road travel by car, traffic information is often available in real time to enable travelers to identify delays on certain routes, and in many cases, to change their planned routes in order to avoid delays.

Concurrent with the improvements in computer technology is an increasing reliance on mobile devices such as smart phones by travelers. Many travel-related tools that were once limited to access via computers, e.g., via web sites, are now optimized for access via a mobile device, whether by mobile device optimized web sites or web-based applications, or via dedicated mobile applications.

In addition, travel-related tools have been developed to enable travelers on travel vehicles such as airplanes to select specific seats on the travel vehicles. At the time of booking and/or at check-in, for example, travelers may be permitted to select specific seats, or at least request an aisle or window seat. The selection may in some instances be performed by the traveler via a web site, mobile app or check-in kiosk, and preferred seating may be offered at an additional cost.

Despite these improvements in travel-related computer technology, challenges still remain for many travelers. For example, seat selection by a traveler is generally restricted after check-in, and changes to seat assignments close to departure often require the involvement of travel provider staff members, generally located at the departure gate, at a ticket desk, or at a central call center.

These restrictions can be problematic in certain scenarios. For example, when a travel vehicle is not booked to capacity, travelers often shift to seats other than their assigned seats, either to be located closer to friends or family, or to sit adjacent an empty seat for greater comfort. However, if a traveler has purchased an ancillary service such as a vegetarian or Kosher meal option, the service is often tied to the traveler's original seat assignment, complicating meal distribution by travel staff members aboard the travel vehicle.

In addition, even where a traveler solicits the help of a gate agent or other travel staff member to change a seat assignment at the last minute, these travel staff members are often busy handling numerous traveler issues prior to departure, including attending to stand by travelers, rebooking wait listed travelers, etc., so seat assignment changes present an additional burden on these staff members. In addition, should seat assignment changes be approved at the last minute, the assignment changes may not be forwarded to travel staff members aboard the travel vehicle, so any ancillary services purchased by a traveler may still be associated with the traveler's prior seat assignment.

Furthermore, additional complications exist when travelers desire to switch seat assignments with other travelers. Traveler-initiated seat assignment changes are generally limited to selection of previously-unused seats, so even if a traveler were to agree with another traveler to switch seat assignments, the switch could only be handled, if at all, by a travel staff member, and only after receiving confirmation from both travelers wishing to switch seat assignments.

A similar issue may also exist with respect to other types of ticket holders. For example, ticket holders who purchase tickets at a concert, sporting event, theater performance, or other entertainment event are often assigned to specific seats (e.g., designated by a section, row and/or seat number). In some instances, these ticket holders may wish to change their seat assignment, potentially with other ticket holders, and doing so, even if permitted, may require involvement and/or or approval of service personnel at a venue.

Therefore, a substantial need continues to exist in the art for an improved manner of enabling travelers and other ticket holders to change seat assignments.

### Summary of the Invention

The invention addresses these and other problems associated with the prior art by providing a method, apparatus, and program product that enable ticket holders, e.g., travelers scheduled to travel on a travel vehicle, or attendees at an entertainment venue, to change seat assignments using a short range wireless network. A change of seat assignment may be initiated in response to a request communicated between a mobile device of a ticket holder and another device over a short range wireless network, and in some instances may result in updating ancillary services such as special meals of one or more ticket holders based upon the updated seat assignment. In some embodiments, seat assignments of two ticket holders may be exchanged, while in other embodiments, a seat assignment of one ticket holder may be changed to select a previously-empty seat, even after boarding a travel vehicle or entering an entertainment venue. The mobile device may communicate over the short range wireless network with another mobile device, e.g., of the other ticket holder or of a staff member, or with a computer system or other device disposed on-board a travel vehicle or disposed in a terminal or other point of departure, or otherwise within an entertainment venue. In addition, in some instances a seat change operation may result in an update to a back-end system of a travel or entertainment provider.

Therefore, consistent with one aspect of the invention, seat assignments may be exchanged between first and second ticket holders respectively assigned first and second seats. In response to a request communicated between a first mobile device of the first ticket holder and a second device over a short range wireless network, a seat change operation is initiated to exchange seat assignments between the first and second ticket holders, and the seat change operation is performed by updating seat assignments for the first and second ticket holders to assign the second seat to the first ticket holder and assign the first seat to the second ticket holder.

Consistent with another aspect of the invention, a seat assignment may be changed for a ticket holder initially assigned a first seat. In response to a request communicated over a short range wireless network between a mobile device of the ticket holder and a second device in a location restricted to ticket holders after the ticket holder has entered the location, a seat assignment for the ticket holder is changed from the first seat to a second seat, and ticket holder information associated with the ticket holder is updated in response to changing the seat assignment to associate an ancillary service for the ticket holder with the second seat.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

### Brief Description of the Drawings

FIGURE 1 is a schematic illustration of an example system suitable for implementing a seat change operation consistent with the invention.
FIGURE 2 is a block diagram of an example hardware and software implementation of the system of Fig. 1.
FIGURE 3 is a block diagram of an example software architecture suitable for implementing a seat change operation in the system of Figs. 1-2.
FIGURE 4 is a flowchart illustrating an example sequence of operations for performing a seat change operation in the system of Figs. 1-3.
FIGURE 5 is a flowchart illustrating another example sequence of operations for performing a seat change operation in the system of Figs. 1-3.

### Detailed Description

Embodiments consistent with the invention enable ticket holders, such as travelers scheduled to travel on a travel vehicle such as an airplane, or attendees to an event at an entertainment venue, to change seat assignments, either with another ticket holder or to an empty seat, and with or without the involvement of a staff member of a travel or entertainment provider. A change of seat assignments may be initiated in response to a request communicated between a mobile device of a ticket holder and another device over a short range wireless network, and in some instances may result in updating ancillary services such as special meals of one or more ticket holders based upon the updated seat assignments, thereby ensuring that any ancillary services associated with a ticket holder will follow along with the ticket holder after the change of seat assignments.

In the embodiments discussed hereinafter, a seat change operation may be used in some instances to exchange seat assignments between first and second ticket holders. A seat change operation may be used to update seat assignments for the first and second ticket holders such that the first ticket holder's seat assignment may be updated to assign the first ticket holder to the seat originally assigned to the second ticket holder, and such that the second ticket holder's seat assignment may be updated to assign the second ticket holder to the seat originally assigned to the first ticket holder. The seat assignments generally refer to specific locations allocated for travelers to sit or otherwise ride in a travel vehicle, e.g., an airplane, a train, a bus, etc., or alternatively, specific locations allocated for attendees at an event at an entertainment venue to view a performance, and are typically identified by a seat identifier, which in some embodiments related to air travel, for example, may include a row number and a letter corresponding to one of the seats in a row (e.g., seat 4C), and in other embodiments related to entertainment, may include a section, row and seat number.

A seat change operation consistent with the invention may be initiated in response to a request communicated between a first mobile device of the first ticket holder and a second device over a short range wireless network. A short range wireless network, in this regard, may incorporate a number of different wireless networking technologies, and may include both point-to-point networks, where two devices communicate directly with one another over a point-to-point connection, as well as multi-device networks where more than two devices share the same network, and in some instances communicate with one another through a central device. In some instances, a network may be hosted and managed by a ticket holder device, while in other instances, a network may be hosted and managed by a central device to which a ticket holder device connects. In addition, in some embodiments, a seat change operation may utilize multiple short range wireless networks, e.g., to communicate with a second ticket holder and a staff member, and in some embodiments, another wireless network, e.g., a Wi-Fi, satellite or cellular network, may be used in addition to a short range wireless network, e.g., to update a back-end system.

A short range wireless network may include a number of different wireless technologies and/or protocols, including but not limited to a near field communication (NFC) network, a point-to-point wireless Ethernet network, a personal area network (PAN), a Bluetooth network, an ad-hoc wireless network, a wireless Ethernet (Wi-Fi) network, or a radio frequency identification (RFID) network. Various standardized services or protocols may be used, such as the Airdrop or iBeacon protocols developed by Apple Computer, Wi-Fi Direct, ANT+, Zigbee, Wireless USB or WiGig industry standard protocols, or other wireless networks and/or protocols as will be appreciated by one of ordinary skill in the art having the benefit of the instant disclosure.

As will become more apparent below, a ticket holder's mobile device may communicate over the short range wireless network with various devices. For example, the mobile device may communicate with another mobile device, e.g., of the other ticket holder or of a staff member (e.g., a flight attendant, a gate agent, an usher, etc.). A ticket holder's mobile device may also communicate with a computer system or other device disposed on-site at an entertainment venue, on-board a travel vehicle (e.g., an airplane) or disposed in a terminal or other point of departure, e.g., a kiosk disposed at a gate or ticketing area. It will be appreciated that a seat change operation may be requested and/or initiated by any device coupled to the short range wireless network.

In some embodiments, a seat change operation may notify one or more entities of an update to seat assignments. For example, a staff member such as a flight attendant or an usher may be notified on his or her mobile device. As another example, a back-end system may be notified. In addition, as a result of a seat change operation, ticket holder information may be updated such that one or more ancillary services for one or both of the ticket holders involved in a seat change operation are effectively updated to reflect the new seat assignments, e.g., so that a staff member delivers a requested special meal purchased by a ticket holder to the ticket holder's new seat. Other types of ancillary services may include headphones, pillows, blankets, onboard entertainment packages, wireless internet access, and any other products or services capable of being ordered on-board a travel vehicle, e.g., food, beverages and other items, as well as any products or services capable of being ordered in an entertainment venue, e.g., food, beverages, seat backs or cushions, etc.

In some embodiments, a seat change operation may be performed at no cost to a ticket holder. In other embodiments, a fee may be charged to one or both ticket holders involved in such an operation.

In addition, in some embodiments, the initiation of a seat change operation may be implemented in a mobile application resident on a ticket holder's mobile device. For example, a seat change operation may be incorporated into a mobile application for an airline or other travel provider, or an entertainment provider. After establishing a short range wireless network connection between the ticket holder's device and another device, e.g., the mobile device of another ticket holder with which seat assignments are to be exchanged, ticket holder information may be received from the other ticket holder's mobile device, and the received ticket holder information may be used to update the seat assignments for the ticket holders. In some embodiments, the ticket holder information may include various ticket holder identification information, including name, frequent flyer number, etc., while in other embodiments only a seat identifier may be provided.

Further, in some embodiments, after establishing a short range wireless network connection between the mobile devices of two ticket holders, another short range wireless network connection may be established between one of the mobile devices and that of a staff member, such that ticket holder information from at least one of the mobile devices may be communicated to a mobile device of the staff member to update the seat assignments for both ticket holders on the staff member's mobile device. In such a scenario, therefore, no communication with a back-end system or other networked computer system may be required, with all data interchange occurring between the mobile devices of the ticket holders and staff member. As such, in situations where no network connectivity is available on-board a travel vehicle or in an entertainment venue, a staff member may still be alerted with changes in seat assignments to enable the staff member to deliver ancillary services such as meals to the proper seats.

In still other embodiments, a short range wireless network may be used to facilitate seat change operations for a single ticket holder, e.g., a traveler wishing to move to an empty seat after boarding or after a performance has begun or seating has otherwise been completed. In such embodiments, a request may be communicated over a short range wireless network between a mobile device of the ticket holder and a second device at a location restricted to ticket holders, e.g., on-board a travel vehicle (e.g., a travel staff member mobile device or on-board computer system) after a traveler has boarded the travel vehicle, or within an entertainment venue after an attendee has presented his or her ticket and entered a ticket holder-restricted area of the venue. In response to the request, a seat assignment of the ticket holder may be changed to a new seat, e.g., in a similar manner in which a ticket holder is able to select a seat when booking or checking-in for a trip. Through the use of the techniques disclosed herein, however, a ticket holder is able to change a seat assignment after boarding a travel vehicle or entering an entertainment venue, and potentially after network connectivity in a travel vehicle or entertainment venue is restricted for technical or regulatory reasons. In response to a seat change, ticket holder information associated with the ticket holder may be updated to associate any ancillary services purchased or requested by a ticket holder with the new seat. Thus, for example, if a ticket holder who is a traveler on an aircraft has purchased a special meal such as a vegetarian or Kosher meal, a staff member may be notified, or in the least the traveler's seat identifier may be updated, so that the staff member delivers the meal to the proper seat.

The focus hereinafter will be on implementations of the invention in connection with air travel, whereby a ticket holder is a traveler possessing a flight reservation, a staff member is a travel staff member such as a flight attendant or gate agent, a location restricted to ticket holders is on-board an aircraft, and a seat is a specific location on an aircraft. It will be appreciated by those of ordinary skill in the art having the benefit of the instant disclosure, however, that the invention may be utilized in connection with other forms of travel, as well as in connection with changing seats in entertainment venues for events or performances such as concerts, sporting events, theater performances, musical performances, etc. In addition, implementation of the herein-described functionality in these other implementations would be well within the abilities of those of ordinary skill in the art having the benefit of the instant disclosure.

Other variations and modifications will be apparent to one of ordinary skill in the art.

### Hardware and Software Environment

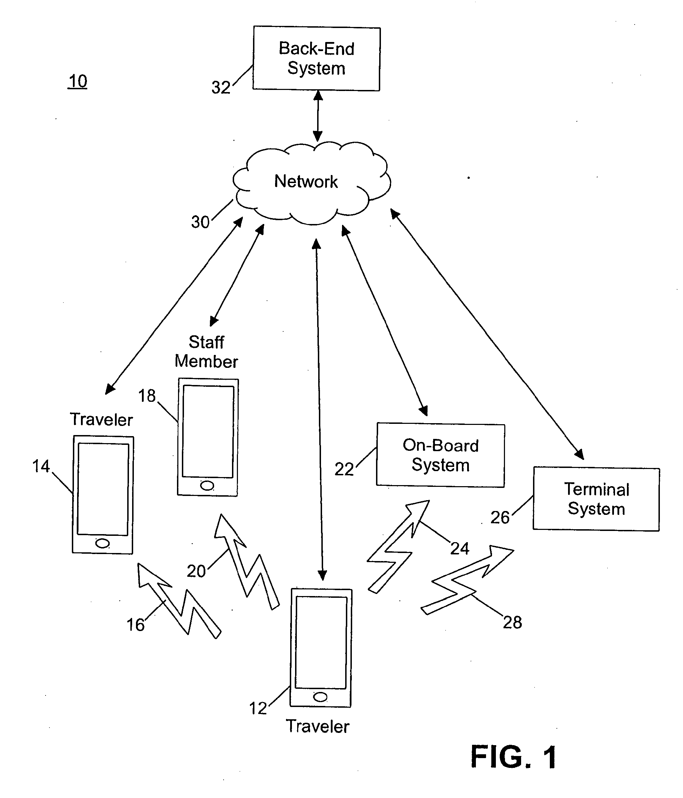

Turning now to the drawings, wherein like numbers denote like parts throughout the several views, Fig. 1 illustrates an example data processing system 10 in which a seat change operation may be implemented consistent with the invention. System 10 is illustrated as including a traveler mobile device 12 from which a seat change operation may be initiated. Traveler mobile device 12 may communicate with a number of different devices and systems via a short range network communications, e.g., another traveler mobile device 14 via a short range wireless network 16, a staff member mobile device 18 via a short range wireless network 20, an on-board computer system 22 via a short range wireless network 24, or a terminal computer system 26 via a short range wireless network 28. Each short range wireless network may incorporate any of the aforementioned networking technologies and/or protocols, and it will be appreciated that the same short range wireless network may be used to couple to multiple devices at different times or different short range wireless networks may be used to different devices.

Each device/system 12, 14, 18, 22, 26 may also be coupled to additional networks, e.g., a network 30, providing access to additional networked services such as a back-end system 32 for a travel provider. Network 30 may include various types of networks, including mobile service networks, e.g., GSM, LTE, CDMA or other cellular networks, as well as local-area or wide-area (wired and/or wireless) networks, the Internet, etc. In addition, multiple networks may be used to connect to some systems (e.g., a combination of a mobile service network and the Internet). Back-end system 32 may be implemented, for example, as a reservation system, a global distribution system (GDS), or any other system capable of storing traveler information associated with traveler reservations, including information such as seat assignments, ancillary services purchased, etc.

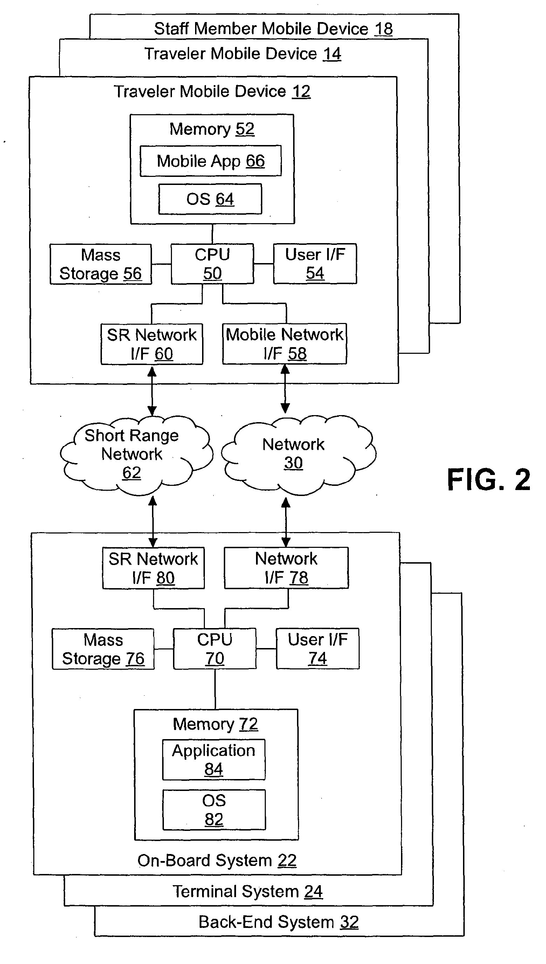

As illustrated in Fig. 2, each mobile device 12, 14, 18 may include a central processing unit 50 including at least one hardware-based microprocessor coupled to a memory 52, which may represent the random access memory (RAM) devices comprising the main storage of the mobile device, as well as any supplemental levels of memory, e.g., cache memories, non-volatile or backup memories (e.g., programmable or flash memories), read-only memories, etc. In addition, memory 52 may be considered to include memory storage physically located elsewhere in the mobile device, e.g., any cache memory in a microprocessor, as well as any storage capacity used as a virtual memory, e.g., as stored on a mass storage device or on another computer coupled to the mobile device. Each mobile device also typically receives a number of inputs and outputs for communicating information externally. For interface with a user or operator, the mobile device typically includes a user interface 54 incorporating one or more user input devices, e.g., a keyboard, a touchscreen, hard buttons, a display, etc. Each mobile device also may be in communication with one or more mass storage devices 56, which may be, for example, internal flash memories, internal hard disk storage devices, external storage devices, network storage, etc. Each mobile device also includes a mobile network interface 58 for connecting to a mobile network such as network 30, as well as a short range wireless network interface 60 for connecting to other networkable devices such as other mobile devices, kiosks, network access points, etc. over a short range wireless network, generically represented by short range wireless network 62. Short range wireless network interface 60 may include support for various types of networks, including any of the aforementioned networks such as Wi-Fi, Bluetooth, NFC, etc. In some embodiments network interfaces 58, 60 may be combined, and in other embodiments additional network interfaces may be provided.

Likewise, each of computer systems 22, 24 and 32 of Fig. 1 includes a central processing unit 70, memory 72, user interface 74, and mass storage device 76, as well as one or both of a network interface 78 and short range wireless network interface 80. It will be appreciated that short range wireless network interface 80 may be provided in a separate networkable device coupled to the respective computer system in some embodiments, e.g., where a personal area or near field network offering only a few inches or a few feet of network connectivity is used to connect with a mobile device. In addition, a back-end system would typically not include any dedicated short range wireless network interface. Each computer system 22, 24 and 32 may also be implemented by one or more server-type computers in some embodiments.

Each computer system 22, 24 and 32 typically operates under the control of an operating system 82 and executes or otherwise relies upon various computer software applications, components, programs, objects, modules, data structures, etc., e.g., an application 84. Likewise, each mobile device 12, 14, 18 typically operates under the control of an operating system 64 and executes or otherwise relies upon various computer software applications, components, programs, objects, modules, data structures, etc., e.g., a mobile application 66, as will be described in greater detail below. Moreover, various applications, components, programs, objects, modules, etc. may also execute on one or more processors in another computer coupled to a computer system or mobile device via a network, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer and/or mobile device. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

In one implementation, mobile application 66 may be implemented as a downloadable application, such as supported by Android and iOS operating systems available from Open Handset Alliance and Apple Computer, respectively, or in other forms of program code as appropriate for the particular mobile device. A mobile application may also be implemented as a web application downloaded from a web server, or even via web pages communicated by a web server. Furthermore, multiple mobile devices and operating systems may be supported consistent with the invention such that mobile devices from different vendors may utilize the same functionality.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

### Seat Change Operation

In the embodiment discussed hereinafter, a mobile application resident on a mobile device 12 may be used to communicate with another mobile device or a computer system over a short range wireless network to request and/or initiate a seat change operation with another traveler on the same travel vehicle. In the discussion hereinafter, an application of the invention in the context of air travel will be described, and as such, a travel vehicle and the seats thereon are seats on an airplane. The invention, however, is not limited to an air travel application, and may be used in connection with other forms of travel in which seats or locations on a travel vehicle are assigned to specific travelers or passengers.

A seat change operation may be initiated to address various situations encountered by travelers. For example, travelers may wish to be seated with friends or family, but due to prior bookings, may not be able to initially select adjacent seats when booking or checking-in. It is common for travelers in such situations to simply ask other nearby travelers after boarding if they would mind exchanging seats. While this is often permitted when other travelers agree to move, the travelers exchanging seats may not receive any ancillary services such as special meals that they have requested or purchased, because the travel staff members aboard the airplane often have pre-printed lists that identify where certain services are to be delivered based on seat number, rather than traveler name. At the least, a traveler may have to talk to a staff member to ask for a requested ancillary service, which may prove to increase a staff member's workload and frustrate the traveler, and particularly in the case of international travel, may be complicated due to language barriers.

As another example, travelers wishing to sit near friends or family may approach a transfer (gate) desk prior to boarding to check if there is a possibility to change their seats to be seated together. In some cases, travelers may run into friends prior to boarding after previously being unaware that their friends were traveling on the same flight, and may wish to change their seat assignments to enable them to sit together. In these situations, even if service staff is able to assign new seats based on availability, the changes are last minute and often made after a list has been printed and provided to the on-board staff members, so again a risk exists that a traveler may receive the ancillary services they are due.

As yet another example, travelers may wish to move to empty seats or rows whenever they are next to other occupied seats to provide themselves and other travelers with additional space to stretch out during a flight. Travelers may also wish to move in order to avoid certain nuisances, to move to an aisle or window seat, or to sit closer to friends or family. As with seat changes affecting multiple travelers, however, if such travelers have requested or purchased any ancillary services, traveler staff members may not otherwise be aware of where to deliver those ancillary services.

Consistent with the invention, however, a seat change operation may be initiated in response to a request communicated between a mobile device of a traveler and another device over a short range wireless network to exchange seats between two travelers, or to change a seat of a traveler to a previously empty seat. In addition, as a result of the seat change operation, seat assignments of affected travelers may be updated such that any ancillary services associated with those travelers may be associated with the new seat assignments, and such that the ancillary services will effectively move with their respective travelers. Further, in some embodiments, a seat change operation may be initiated after boarding to update traveler information for any affected traveler to indicate the seat change and thereby enable travel staff members to deliver ancillary services to the proper seats.

As one example, a seat change operation may be initiated between first and second travelers through their respective mobile devices, e.g., over an NFC or Bluetooth network, such that their seat assignments are exchanged. A seat change operation may also result in an update made to an on-board computer system, a back-end system and/or a staff member mobile device to reflect the seat change and provide the staff member with updated traveler information so that any ancillary services are properly delivered.

As another example, a seat change operation may be initiated between a traveler and a staff member aboard an airplane through their respective mobile devices, and may result in an update made to an on-board computer system and/or back-end system to ensure proper delivery of ancillary services. Similarly, a seat change operation may be initiated between a traveler and a staff member at a gate or ticket desk, or between a traveler and an on-board computer system or a computer system disposed in a terminal (e.g., at a self-serve kiosk or access point).

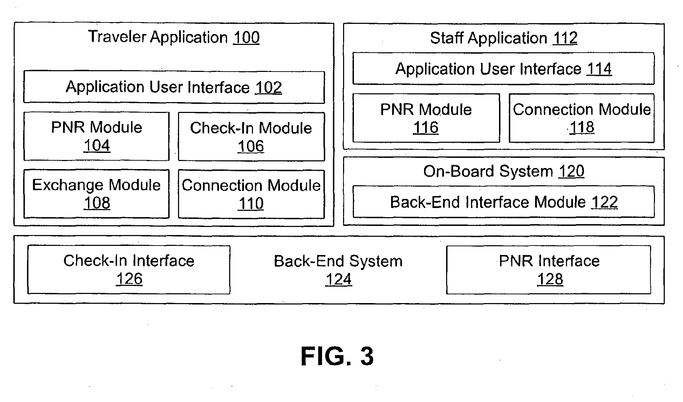

Fig. 3 illustrates an example software architecture suitable for implementing a seat change operation consistent with the invention. In a traveler application 100, e.g., a mobile application resident on a traveler mobile device, an application user interface 102 provides a user interface through which a traveler interacts with the application, e.g., via a touch screen. The user interface may include, among other features, options for checking in, checking flight status, booking reservations, checking frequent flyer accounts, and other features available on typical travel-related mobile applications. In addition, the user interface may include an option for initiating a seat change operation consistent with the invention.

A PNR module 104 in traveler application 100 handles passenger name record (PNR) related queries and updates, e.g., to perform operations such as retrieving and updating a PNR and retrieving and updating seat identifiers and other traveler information. A check-in module 106 handles traveler check-in related queries and updates, e.g., to perform a check-in or cancel a check-in. Check-in module 106 may also be used to display a seat map through which a traveler may select a seat and update the seat map based upon selection of a seat and/or exchange of a seat assignment with another traveler. An exchange module 108 handles data exchange related processes and actions, and provides an interface for operations such as encoding/decoding and formatting data being transferred, and interacting with other modules/components required for data transfer/exchange operations. Connection module 110 handles connectivity related queries and actions, and provides an interface for operations such as scanning for devices according to the desired connectivity mechanism (e.g., a particular short range wireless network protocol), connecting and/or disconnecting to and from another device using the selected connectivity mechanism, and transferring data according to the selected connectivity mechanism.

Similarly, in a staff application 112, e.g., a mobile application resident on a flight attendant's, gate agent's or other travel staff member's mobile device, an application user interface 114 providing desired functionality for a staff member may be provided. Among other features, the user interface may provide a staff member with a graphical display of a seat map along with traveler information associated with the traveler in each seat, as well as any ancillary services (e.g., special meals), purchased or requested by the traveler in each seat, so that the staff member knows where to deliver special meals or other ancillary services requested by travelers. A PNR module 116 and a connection module 118, having similar functionality to PNR module 104 and connection module 110 of traveler application 100, may also be provided.

In an on-board system 120, e.g., a computer system located on an aircraft, a back-end interface module 122 may be used to interface with a back-end system 124. On-board system 120 may also include functionality for interacting with traveler and/or staff applications, and for performing other on-board activities as will be appreciated by those of ordinary skill in the art having the benefit of the instant disclosure. In addition, on-board system 120 may store PNR's and other traveler information for all booked travelers in some embodiments. In some embodiments, where two travelers initiate a seat change operation with one another, on-board system 120 may interact with one or both of the travelers' mobile applications and may notify a staff member application of the seat change, without the staff member having to interact with either traveler directly. On-board system 120 may also notify back-end system 124 to enable the traveler PNR's to be updated with new seat identifiers, although in other embodiments no notification of a back-end system may be required.

Back-end system 124 may include, among other features, a check-in interface 126 and a PNR interface 128. Check-in interface 126 interacts with check-in module 106 of a traveler application 100 to perform a traveler check-in, while PNR interface 128 interacts with PNR modules 104, 116 to handle queries and updates of PNR's and other traveler information. Additional functionality, unrelated to seat change operations, may also be utilized in back-end system 124, as will be appreciated by those of ordinary skill in the art having the benefit of the instant disclosure.

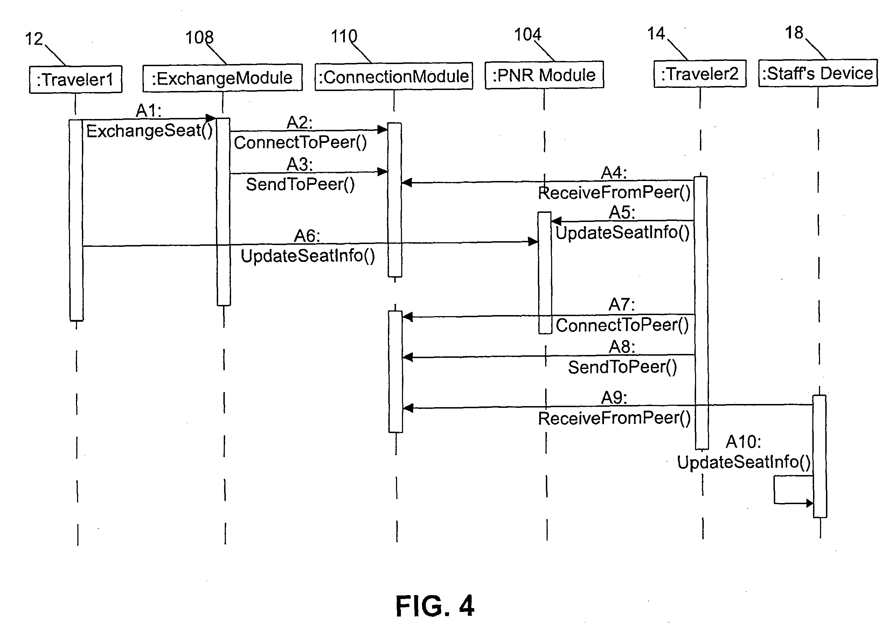

Now turning to Fig. 4, this figure illustrates a seat change operation initiated to exchange seats between two travelers while on-board an aircraft. The operation may be initiated, for example, after one traveler asks another traveler if they would be willing to exchange seats. To initiate the operation, one traveler may open the mobile application on his or her mobile device 12, and then request a seat exchange via user interface of the mobile application, which then issues an ExchangeSeat call to exchange module 108 (step A1). Next, exchange module 108 sends a ConnectToPeer request to connection module 110 (step A2), followed by a SendToPeer request (step A3). In this embodiment, connection module 110 represents a distributed service with instances resident in both mobile devices 12, 14. As such, connection module 110 then initiates a connection attempt over a short range wireless network (e.g., an NFC or Bluetooth network) with the other traveler's mobile device 14, which confirms the connection attempt with a ReceiveFromPeer request to connection module 110 (step A4). The mobile applications on mobile devices 14 and 12 then issue UpdateSeatInfo calls to PNR module 104 (steps A5 and A6) to update the traveler information for each traveler to swap the seat identifiers therefor. The seat assignments of the travelers are then updated.

In addition, as shown in steps A7-A10, a travel staff member may be notified of the seat change operation by either traveler mobile device (here, traveler mobile device 14), the notification may occur via the same or a different short range wireless network, and similar to the connection between mobile devices 12, 14, a connection is established between mobile device 14 and a staff member mobile device 18 using ConnectToPeer and SendToPeer requests (steps A7 and A8) issued by mobile device 14 and confirmed by ReceiveFromPeer request (step A9) issued by mobile device 18. Mobile device 18 then updates its locally-stored traveler information via a local UpdateSeatInfo call (step A10). The seat change operation is then complete, and staff member mobile device 18 is updated such that any ancillary services associated with one of the travelers is now associated with the traveler's new seat.

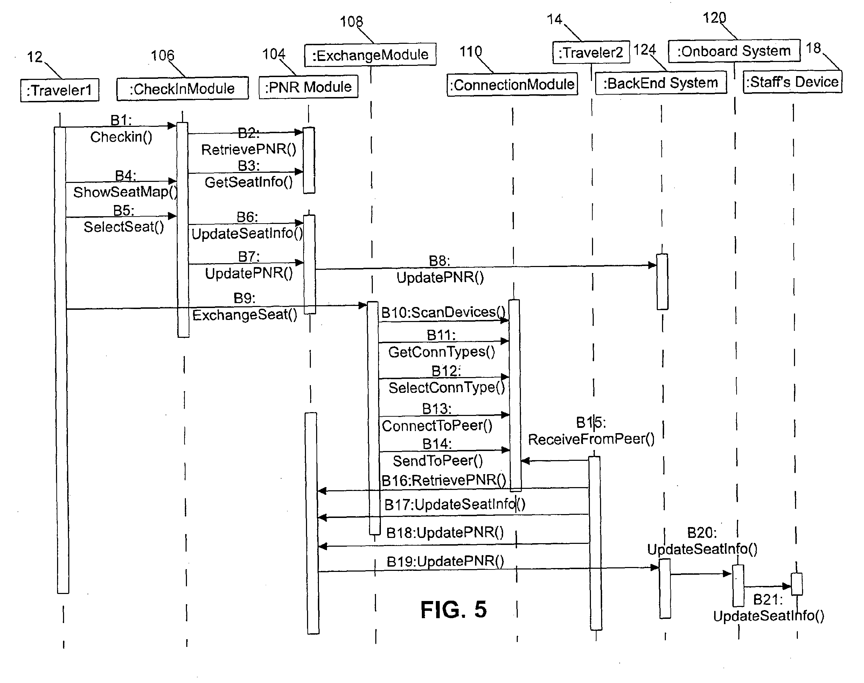

Next, Fig. 5 illustrates a similar seat change operation that may be performed when a traveler is online, and thus capable of accessing off-board computer systems. Steps B1-B8 illustrate a traveler checking in using mobile device 12. A Checkin request is issued to check-in module 106 (step B1), which subsequently issues a RetrievePNR request (step B2) and GetSeatInfo request (step B3) to PNR module 104 to retrieve traveler information, including the traveler's current seat assignment. Next, the traveler accesses a seat map and selects a seat, represented by ShowSeatMap request (step B4) and SelectSeat request (step B5) issued to check-in module 106. Based on the selected seat, check-in module 106 issues an UpdateSeatInfo request (step B6) and UpdatePNR request (step B7) to update the traveler information in PNR module 104. PNR module 104 then synchronizes the traveler information with back-end system 124 by issuing an UpdatePNR request (step B8) to back-end system 124.

A seat change operation may then be initiated after the traveler asks another traveler if they would be willing to exchange seats. The traveler may then request a seat exchange via an ExchangeSeat call to exchange module 108 (step B9). Next, exchange module 108 issues ScanDevices (step B10), GetConnTypes (step B11) and SelectConnType (step B12) requests to connection module 110 to locate a connection with the other traveler's mobile device. Next, exchange module 108 sends a ConnectToPeer request to connection module 110 (step B13), followed by a SendToPeer request (step B14) to establish a connection with mobile device 14 over a short range wireless network. Upon receipt of the connection attempt a ReceiveFromPeer request is issued by mobile device 14 of the other traveler (step B15) to establish the connection. Mobile device 14 then issues an a RetrievePNR request to PNR module 104 (step B16) followed by UpdateSeatInfo and UpdatePNR requests to PNR module 104 (steps B17 and B18) to update the traveler information for each traveler to swap the seat identifiers therefor. The seat assignments of the travelers are then updated.

PNR module 104 then synchronizes the traveler information with back-end system 124 by issuing an UpdatePNR request (step B19) to back-end system 124. Back-end system 124 then issues an UpdateSeatInfo request to on-board system 120 (step B20), which then forwards the UpdateSeatInfo request to the staff member mobile device 18, thereby alerting the staff member of the exchange of seats between the two travelers, and enabling any ancillary services associated with the travelers to be associated with the new seat assignments.

It will be appreciated that the operations illustrated in Fig. 4 and 5 may be utilized in connection with seat changes involving only a single traveler, e.g., by connecting a traveler with a staff member mobile device or an on-board system, terminal system, or back-end system in a similar manner to that described above for connecting with another traveler mobile device. Moreover, such operations may be performed prior to or after boarding, with staff member mobile devices and/or other travel provider computer systems updated to enable travel staff members to be made aware of seat changes initiated by travelers.

It will further be appreciated that a travel staff member aboard a travel vehicle may be notified of seat assignment changes in various manners, e.g., via a notification to the staff member's mobile device or an on-board computer system. In other embodiments, a travel staff member may utilize a mobile device or tablet when distributing meals or other ancillary services, such that the most up-to-date seat assignments (including any changed assignments) will be displayed to a staff member when distributing such services, whereby no specific notification of a seat assignment change may be required.

Other modifications may be made without departing from the spirit and scope of the invention. Therefore, the invention lies in the claims hereinafter appended.

According to one aspect, changing seat assignments presented herein includes the following points:
1. A method of changing a seat assignment of a ticket holder, wherein the ticket holder is initially assigned a first seat, the method comprising:
   in response to a request communicated over a short range wireless network between a mobile device of the ticket holder and a second device in a location restricted to ticket holders after the ticket holder has entered the location, changing a seat assignment for the ticket holder from the first seat to a second seat; and
   updating ticket holder information associated with the ticket holder in response to changing the seat assignment to associate an ancillary service for the ticket holder with the second seat.
2. The method of point 2, wherein the second device comprises a staff member mobile device or a computer system disposed at the location.
3. The method of point 1 or point 2, further comprising notifying a staff member at the location of the change in seat assignment of the ticket holder such that the staff member provides the ancillary service to the ticket holder at the second seat.
4. The method of any of points 1 to 3, wherein the ticket holder is a traveler, wherein the first and second seats are on-board a travel vehicle, and wherein the location restricted to ticket holders is on-board the travel vehicle.

## Claims

1. A method of exchanging seat assignments between first and second ticket holders, wherein the first ticket holder is assigned a first seat and the second ticket holder is assigned a second seat, the method comprising:
in response to a request communicated between a first mobile device of the first ticket holder and a second device over a short range wireless network, initiating a seat change operation to exchange seat assignments between the first and second ticket holders; and
performing the seat change operation by updating seat assignments for the first and second ticket holders to assign the second seat to the first ticket holder and assign the first seat to the second ticket holder.

2. The method of claim 1, wherein the second device comprises one of a second mobile device of the second ticket holder, a second mobile device of a staff member, an on-board or on-site computer system and a terminal computer system.

3. The method of claim 1 or claim 2, wherein performing the seat change operation includes at least one of
- updating the seat assignments in a back-end system,
- notifying a staff member of the updated seat assignments,
- updating at least one ancillary service for at least one of the first and second ticket holders based on the updated seat assignments, and
- charging a fee to at least one of the first and second ticket holders.

4. The method of any of the preceding claims, wherein initiating the seat change operation is performed by a mobile application resident on the first mobile device.

5. The method of any of the preceding claims, wherein the first seat is a seat in an entertainment venue and the first and second ticket holders are attendees at an event held at the entertainment venue.

6. The method of any of claims 1 to 4, wherein the first seat is a seat in a travel vehicle and the first and second ticket holders are first and second travelers, respectively.

7. The method of claim 6, wherein the second device comprises a second mobile device for the second traveler, and wherein performing the seat change operation includes:
establishing a first short range wireless network connection between the first mobile device and the second mobile device;
receiving traveler information from the second mobile device over the first short range wireless network connection; and
using the received traveler information to update the seat assignments for the first and second travelers.

8. The method of claim 7, wherein the traveler information includes a seat identifier.

9. The method of claim 7 or claim 8, wherein performing the seat change operation further includes:
establishing a second short range wireless network connection between a third mobile device of a travel staff member and at least one of the first and second mobile devices; and
communicating traveler information from at least one of the first and second mobile devices to the third mobile device over the second short range wireless connection to update the seat assignments for the first and second travelers on the third mobile device.

10. The method of any of claims 6 to 9, wherein performing the seat change operation further includes updating a back-end system to update the seat assignments for the first and second travelers in the back-end system.

11. The method of any of claims 1 to 8, further comprising updating the seat assignments on a third mobile device of a staff member.

12. The method of any of the preceding claims, wherein the request is initiated from the first mobile device or the second device.

13. The method of any of the preceding claims, wherein the short range wireless network is a near field communication (NFC) network, a point-to-point wireless Ethernet network, a personal area network (PAN), a Bluetooth network, an ad-hoc wireless network, a wireless Ethernet network, or a radio frequency identification (RFID) network.

14. An apparatus, comprising:
at least one processor; and
program code configured upon execution by the at least one processor to exchange seat assignments between first and second ticket holders, wherein the first ticket holder is assigned a first seat and the second ticket holder is assigned a second seat, and wherein the program code is configured to:
in response to a request communicated between a first mobile device of the first ticket holder and a second device over a short range wireless network, initiate a seat change operation to exchange seat assignments between the first and second ticket holders; and
perform the seat change operation by updating seat assignments for the first and second ticket holders to assign the second seat to the first ticket holder and assign the first seat to the second ticket holder.

15. A program product, comprising:
a non-transitory computer readable medium; and
program code stored on the non-transitory computer readable medium and configured upon execution by at least one processor to exchange seat assignments between first and second ticket holders, wherein the first ticket holder is assigned a first seat and the second ticket holder is assigned a second seat, and wherein the program code is configured to:
in response to a request communicated between a first mobile device of the first ticket holder and a second device over a short range wireless network, initiate a seat change operation to exchange seat assignments between the first and second ticket holders; and
perform the seat change operation by updating seat assignments for the first and second ticket holders to assign the second seat to the first ticket holder and assign the first seat to the second ticket holder.
